# EUROPEAN PATENT APPLICATION

(11) **EP 4 513 880 A1**
(43) Date of publication of application: **26.02.2025**
(21) Application number: 23192493.7
(22) Date of filing: 21.08.2023
(51) Int. Cl.: H04N 21/442, H04N 21/658

(54) **METHODS AND APPARATUS TO ASSOCIATE PANEL DATA WITH CENSUS DATA**

(71) Applicant: Neuromedia Software, 4400 Flémalle (BE)
(72) Inventor: MENGAL, Pierre, 4550 Nandrin (BE)
(74) Representative: Gevers Patents

(57) **Abstract**

The invention proposes a method to associate panel data with census data. From the access to a platform (701) for consuming an original digital content (1) for a census measurement, a unique identifier (10) is generated. Said unique identifier (10) is included in a digital flux (20) used for panel measurements. As said unique identifier (10) is saved both during census and panel measurements, a sure match between the collected census and panel data is thus possible.

## Description

### Technical area

Generally, the invention relates to the field of media monitoring. According to a first aspect, the invention relates to a method for associating panel data with census data. According to a second aspect, the invention relates to an apparatus for associating panel data with census data.

### Prior art

There is an interest to gain insights on how users interact with and/or consume digital content, particularly in an integrated, single-source cross-media context that includes terrestrial TV and Radio. In the field of media monitoring and for example for online content audience measurement, there exist two types of measurements: panel audience measurement (or panellist / panel measurement) and census (or usage) measurement. These two types of measurements are well-known by one skilled in the art.

Panel audience measurement allows gathering demographic information about panellists and collecting data about the contents consumed by same panellists. A panellist is a person who has agreed to be monitored, for instance by an audience measurement entity. A panellist typically agrees to provide detailed demographic information such as race, age, income, home location for instance. To determine the contents consumed by panellists, there exist different monitoring techniques. Monitoring the media consumption of audience members (or panellists) is often done by using a dedicated apparatus. For instance, one can use a portable people meter (PPM) from Nielsen Audio. There exist other examples for instance from Médiamétrie, the different examples being sometimes named portable metering device, portable personal meter. A device such as a PPM from Nielsen Audio is an electronic device that is generally worn by a panellist and configured to monitor media consumption (e.g., viewing and/or listening activities). For monitoring media consumption, one can use the so-called watermarking technique. According to that technique, a watermark message is incorporated in the broadcast signal, forming a watermarked signal. The PPM then captures the watermarked signals provided by the broadcasters. The watermark messages incorporated in these watermarked signals are then compared with the watermark messages of the different broadcasters, allowing to determine which content is consumed by a panellist. Another method to monitor the media consumption of panellists is the fingerprinting technique, known by one skilled in the art. According to that technique, the content emitted by each broadcaster is stored in real time in a database in the form of fingerprints. The reading device of each panellist (a smartphone for instance), via an app for example, is used to listen to its environment. And said environment is recorded in the smartphone at regular intervals in the form of fingerprints, for instance audio fingerprints. The fingerprints recorded in the smartphone are compared with the audio fingerprints stored in the database, which allows to know the contents consumed by each member of the panel.

Census (or usage) measurement refers to information to which broadcasters have access from the interaction between a user and a media/device that he uses (for instance a web browser) to access a given content. Such census information or census data are for example: type and/or version of the used player to access the content, type of the used device to consume the content (mobile phone, smart TV, computer are non-limiting examples), type of interactions between the user and the player (pauses, played sessions, ...).

WO2020131960 relates to the field of media monitoring, and more precisely to the field of determining media exposure of a panellist. This document proposes to use both panel and census data, in order to take full benefits of both measurements. However, in order to link both data, it is necessary to install a specific application on a given device.

US20170228795 discloses methods and apparatus to associate panellist data with census data. In most of the disclosed embodiments, it is proposed to use a proxy server for allowing associating these two types of data. The proxy is configured with a specific port that is used as ID. This solution is quite consuming in terms of resources as it is necessary to absorb all the communications from all the panel. Moreover, this solution is limited to digital communications, and it is necessary to ask for user permission. US20170228795 also discloses very briefly another embodiment that does not need a proxy. However, this other solution is not flexible as it is required to use only one specific device.

There is an interest to use both panel and census data. But, at the same time, there is also a need to have a method allowing associating both types of data surely, and with enough flexibility.

### Summary of the invention

According to a first aspect, one of the objects of the invention is to provide a method for associating panel data with census data surely and that is flexible enough. To this end, the inventors propose a method for associating panel data with census data and comprising the following steps:
a) accessing a platform for accessing an original digital content for a census measurement campaign;
b) generating a unique identifier associated with the census measurement campaign from the access of step a);
c) transmitting to an analyser for a panel measurement campaign a secondary digital flux, wherein said secondary digital flux is based on said original digital content of step a) and comprising said unique identifier.
The platform of step a) is for instance a web page.

The method of the invention allows associating panel and census data surely, as there is a unique identifier that needs to be the same when one wants to use and complement both data. With the method of the invention, the unique identifier is created when accessing a platform (web page for instance) for reading an original online content that is used for the census measurement campaign. In other words, by the simple access to such a platform, the unique identifier is created. And that unique identifier is thereafter transmitted through the digital flux for a further panel measurement campaign, allowing a later sure match between census and panel measurements. No additional device or application/program is needed with the method of the invention. And it can be implemented for all possible reading devices, reading applications. Therefore, the method of the invention is more flexible than the ones of the prior art. We could also say that compliance of the method of the invention is higher. This aspect is particularly important when one has to constitute a panel: in order to convince people to adhere to a panel measurement campaign, it is desired to have a solution that requires few modifications in the panellists' habits. Among other things, with the method of the invention, it is not necessary to ask a panellist to reconfigure their internet connexion for instance for using a specific proxy server for instance. Compared to other known techniques, the method of the invention is less demanding in terms of resources and less expensive.

With the method of the invention, it is possible to take profit of the advantages of both panel and census data. By taking into account census data, one can in real-time supplement panel data with consumption information of contents, and have a more precise knowledge of that consumption.
For instance, one can further know the types of players and devices used, the origin, context and localisation of the media consumption, users' behaviours, if a headset is used,...On the other hand, by using panel data, reliability of the users' profiles derived from census measurements can be improved. Indeed, to become a panellist, one normally has to register and give different socio-demographic details. And so, by using panel data, one can supplement census data. This is particularly important as it is well-known that many users' profiles are false and/or not complete in online platforms from which census measurement campaign are carried out. Enriching the census data with those of the panel increases the reliability of the socio-demographic data of the profiles and the efficiency of the recommendation algorithms.
Hence, with the method of the invention, one can have a richer knowledge about media consumption. Thanks to the method of the invention, it is possible to provide new data to improve effectiveness of Dynamic Ad Insertion (DAI) and content recommendation engines thanks to more precise profiling. In other words, it is possible to send personalized ads, and that more easily with the method of the invention.
Given the nature of traceability of census data, only one confirmed match is enough to qualify the whole digital data consumption history of a panellist. So, this is also effective for all past data already collected before a panellist is added, but also all future data when he leaves the panel. The method of the invention is compatible with all passive measurement methods available on the market.

With the method of the invention, a single match can be sufficient to qualify the entire history of a tracked digital measurement (e.g. via a tracking cookie), including the entire future. Hence, the method of the invention is very efficient in terms of cost/benefit. Indeed, it would be enough to have a person in the panel for a few days to enrich all his past and future consumption (provided that he has given his consent of course). The method is also effective in getting rid of third-party cookies, since a single match per site (or domain), and therefore first-party cookie, is enough to reconcile the panelist's consumption into a single one.

The unique identifier could be named unique key or unique token. The analyser could be named analysing means or analysing device. It is for instance a portable people meter (PPM), also known as portable metering device or portable personal meter.

Within the method of the invention, the digital flux is generated at least in part from the original digital content.

With the method of the invention, it is possible to integrate panel measurement of terrestrial television and radio content, not connected to the web. The content monitored is therefore not limited to digital content with the method of the invention. Conventional radio or TV signals can be monitored with the method of the invention. Thus, with the method of the invention, it is possible to enrich a passive panel measurement of traditional TV or radio consumption with census data.

The inventors propose several preferred embodiments comprising optional features, where some of them can be combined.

According to a possible embodiment, the digital flux comprises at least part of the original digital content. Preferably, the digital flux comprises all the original digital content. These two preferred embodiments allow to have a method that is particularly simple to implement.

According to another possible embodiment, said digital flux comprises two signal, a first one comprising said unique identifier, and a second one that is based on said original digital content of step a). According to that embodiment, the two signals of the digital flux are sent to the analyser. Preferably the first signal is sent before the second one. The advantage of this embodiment is that it would be possible to measure a content that is not audio-visual, such as online press. According to another possible embodiment, first and second signals are transmitted simultaneously.

According to another possible embodiment, the unique identifier is incorporated in at least part of the original digital content of step a) for creating the digital flux.
In this embodiment, the unique identifier is a watermark, preferably an audio watermark. Preferably, the unique identifier is incorporated in all the original digital content that is for instance the listened and/or the watched program. So, according to this embodiment, the unique identifier is embedded in the original stream itself, or at least part of it. Thereafter, the analyser shall decode the unique identifier (that could be named also watermark or unique ID), and shall associate it with a panellist and store it for further processing. This unique identifier refers to the original digital content and to a given digital session that can be linked later on.

Preferably, the original digital content is an audio signal. Then, the digital flux is also preferably an audio signal. And the unique identifier is also preferably an audio signal forming one of the two signals composing the digital flux, or is an audio watermark incorporated in at least part of the original audio digital content for forming the digital flux.

Preferably, the unique identifier is maximum 2 bytes long.
This allows having a detection that is more efficient. The shorter the unique identifier, the more efficient the detection.

Preferably, the unique identifier starts at 0 each day.
This allows reducing the length of the unique identifier.

Preferably, the unique identifier is generated by using an Hi/Lo algorithm.
By using such an algorithm, one can limit the necessary memory to save the unique identifier, and also to have a more efficient detection. Hi/Lo algorithm is known by one skilled in the art.

According to a possible embodiment, the content of said digital flux is analysed by using a watermarking technique for the panel measurement campaign.
Such a technique is particularly well adapted if the analyser is a portable people meter (PPM), also known as portable metering device or portable personal meter.

According to a possible embodiment, the content of said digital flux is analysed by using a finger printing technique for the panel measurement campaign.
Fingerprints can be created in real time. Simple applications can be installed for instance on a mobile phone to implement a fingerprinting technique. By using a fingerprinting technique, it is not necessary to modify the original signal from the broadcaster. And so, it is not necessary to have close collaboration with the different broadcasters. This technique thus represents great flexibility and ease to use.

Preferably, a unique session ID is created when accessing the original digital content, said unique session ID being used for generating the unique identifier.
Session ID could be named also session token. According to an example of this embodiment, when a browser has access to the original digital content, a session ID is created that allows to get a unique token or unique identifier from an Application Programming Interface.

Preferably:
- data related to the census measurement campaign of step a) is saved with the unique identifier; and
- data related to the panel measurement campaign of step c) is also saved with the unique identifier.
Thereafter, the match between census and panel data can be done surely, thanks to the unique identifier.

Thanks to said unique identifier and that match, it possible to enrich census data with panel data and vice versa.

According to a second aspect, the inventors propose an apparatus for associating panel data with census data and comprising:
- means for accessing a platform for accessing an original digital content;
- a key generator for creating a unique identifier when said platform is accessed ;
- means for transmitting a digital flux, wherein said digital flux is based on said original digital content and comprising said unique identifier;
- an analyzer for performing a panel measurement campaign from said digital flux.
The advantages discussed for the method also apply to the apparatus mutatis mutandis. The apparatus according to the second aspect of the invention is generally distributed, comprising various units that are not physically connected necessarily. The word 'apparatus' used for the second aspect of the invention could be replaced by system, or distributed system for instance. Other names are possible.

Examples of means for accessing the original online content are: a web browser, a media player. Other examples are possible. The key generator is for instance an Application Programming Interface (API).

The apparatus preferably comprises first saving means for recording data linked to the access to the platform for accessing said original digital content and second saving means for recording data linked to said digital flux.
First (respectively second) saving means are for instance first (respectively second) databases or first (respectively second) memories.

### Brief description of the figures

These aspects of the invention as well as others will be explained in the detailed description of specified embodiments of the invention, with reference to the drawings in the figures, in which:
- Fig. 1 schematically shows the method according to the first aspect of the invention;
- Fig. 2 schematically shows a possible embodiment of the invention;
- Fig. 3 schematically shows another possible embodiment of the invention;
- Fig. 4 illustrates the watermarking technique;
- Fig. 5 illustrates the fingerprinting technique.
The drawings in the figures are not to scale. Generally, similar elements are designated by similar reference signs in the figures. The presence of reference numbers in the drawings is not to be considered limiting, even when such numbers are also included in the claims.

### Detailed description of possible embodiments of the invention

The invention in general aims at associating surely panel data with census data. Census (or usage) data refers to information to which broadcasters have access from the interaction between a user and a media/device that he uses (for instance a web browser) to access a given content. Panel audience measurement allows gathering demographic information about panellists and collecting data about the contents consumed by same panellists. People can become panellists via various means: media device (e.g., via a website), via a telephone interview, by completing an online survey, advertisements, product packaging, etc...

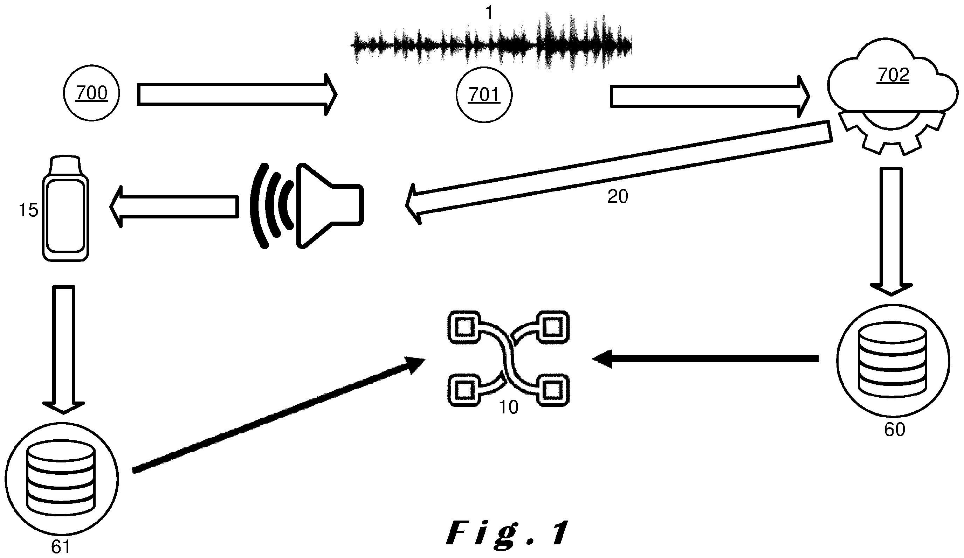

Figure 1 schematically illustrates the method of the invention. First, one has to access an original digital content 1. This can be done by using various known techniques and devices. As a non-limiting example, one can access such original digital content 1 through a specific web page 701 of a web browser 700. When accessing the platform 701, in the example shown in figure 1 through a web browser 700, a specific reading ID is generated for that session. This specific reading ID allows to generate a unique identifier 10 from an application programming interface 702 (or API). This unique identifier 10 is associated with the session, for instance the audio session, of the original digital content 1 from the specific web page 701 of the web browser 700. And this session is typically used for obtaining census data. Hence this session could be named census measurement campaign allowing to collect various census data. Preferably, first saving means 60 allows to record data linked to that session and that original digital content 1, as well as said unique identifier 10. Non-limiting examples for the unique identifier 10 are: 0x086ABC1For 0xBC1F (in hexadecimal).

Thereafter, the inventors propose to send to an analyser 15 a digital flux 20 for a panel measurement campaign. Said digital flux 20 comprises the unique identifier 10 that has been generated previously, but also some data signal relating to the original digital content 1. Preferably, said digital flux 20 comprises at least part of the original digital content 1, and still more preferably all said original digital content 1. In a way, the digital flux 20 could be named 'playback signal', referring to the original digital content 1, but comprising in addition the unique identifier 10. The analyser 15 thereafter detects said digital flux 20. Data linked to original digital content 1 and the unique identifier 10 are saved thanks to second saving means 61. Therefore, the match or association between both measurements can be done surely later on.

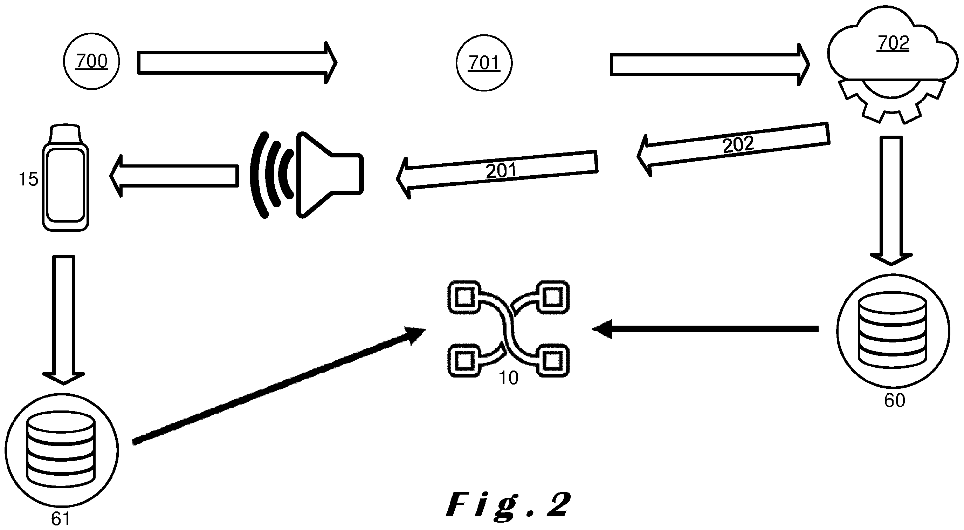

The analyzer 15 can be any type of device able to listen and analyze the digital flux 20. So, it can be for instance a mobile phone, a tablet or a computer with installed program or application for carrying out panel measurement campaigns. According to another example, the analyser 15 is a portable people meter (PPM), also known as portable metering device or portable personal meter. Such a device that is known by one skilled in the art is often used for panel measurement campaigns. Figures 2A-2C show different possible examples of PPM 15.

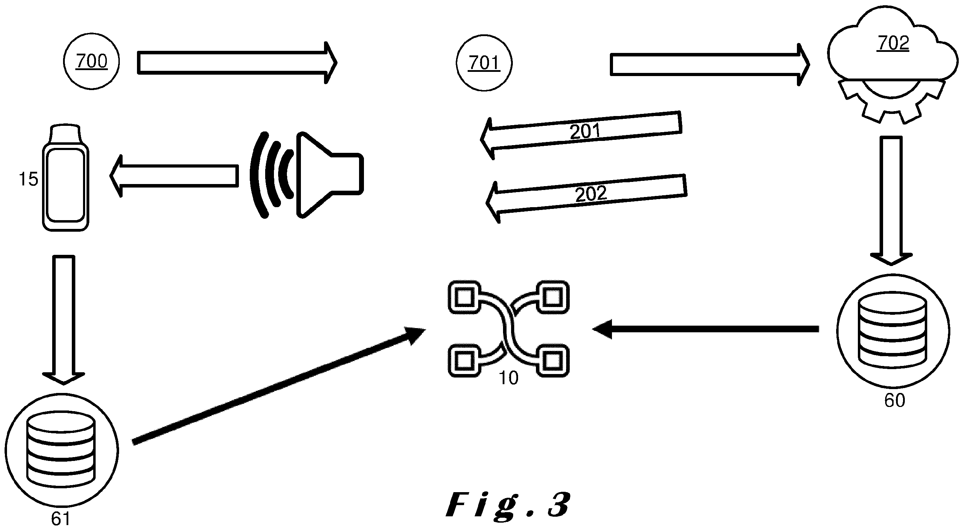

Different possibilities can be used to incorporate the unique identifier 10 in the digital flux 20. According to a first possible embodiment, the digital flux 20 comprises two signals: a first signal 201 that comprises the unique identifier 10, and a second signal 202 based on the original digital content 1. Preferably, said second signal 202 comprises part, and still more preferably, all the original digital content 1. In this embodiment, the first signal 201 can be sent before the second signal as a watermarked jingle for instance. This is illustrated in figure 2.. But first 201 and second 202 can also be transmitted simultaneously according to another possible embodiment. This is illustrated in figure 3. In this last example, first signal 201 can represent an ultrasonic pulse (that could be named watermarked silence).

According to another possible embodiment, the original digital content 1 is modified so that the unique identifier 10 is incorporated as a watermark for forming the digital flux 20. So, in this last embodiment, a single signal forms the digital flux 20 including both a specific reading ID for the original digital content 1, and the unique identifier 10 for the reading session (that is preferably linked to the user).

In both cases, the analyzer 15 decodes the unique identifier 10 and associates it with a panelist. Said unique identifier 10 is saved for a later treatment. This unique identifier 10 points towards the online digital content 1 or data / reference associated with it, allowing the association or match to be done later on between census and panel data.

So, with the method of the invention, we have:
- a service that records that an original digital content 1 (for instance: program X of dd/mm/yy) has been accessed and saved with a unique identifier 10 (for instance: 123) for a given user (for instance: IP address 1.2.3.4 with a reading device Tab1; other examples are user ID, tracking cookie and any cross device identifier), and
- the analyzer 15 that has recognized the unique identifier 10 (123 in that example) for panelist P1.
With these information's, one can determine that:
- the unique identifier 10 (123) corresponds to program X of dd/mm/yy, and so that panelist P1 accessed that program at that time: panel data is enriched with census data; and that
- data relating to IP address 1.2.3.4 with the reading device Tab1 can reasonably be associated with panelist P1 for that day: census data is enriched with panel data.
This example is presented only for illustrative purposes and does not limit the claimed invention.

Without limiting the possible interpretation of the claimed invention, the method of the invention could also be interpreted as follows. From the access of a platform 701 (webpage for instance) for reading an original digital content 1, a unique identifier 10 is generated. A digital flux 20 comprising said unique identifier 10 and based on the original digital content 1 is transmitted to an analyzer 15 for collecting panel data.

Preferably, the inventors propose to generate a unique identifier 10 that comprises few bits in order to increase his detection among the digital flux 20. More preferably, said unique identifier 10 is maximum 2 bytes long, representing thus up to 65536 possibilities. The inventors also propose according to a preferred embodiment to generate a unique identifier 10 that starts at 0 each day. This allows to limit its sized.

For limiting the size of the unique identifier 10, different methods can be used, possibly in combination. For example, one can use an Hi/Lo algorithm known by one skilled in the art.

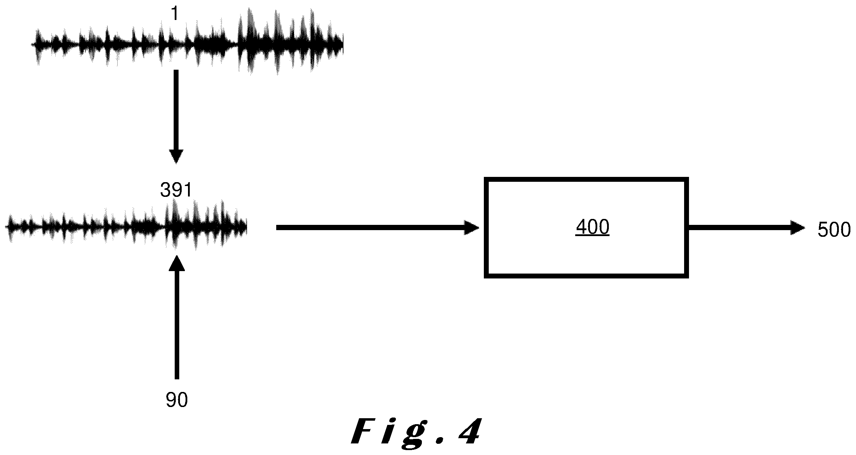

For the panel measurement campaign, different methods can be used such as for example a watermarking or a fingerprinting technique. Figure 4 illustrates the watermarking technique. According to that technique, a watermark 90 linked to a specific program is incorporated in an original digital content 1 to form a watermarked signal 391. Thereafter, a match 400 of said watermarked signal 391 is carried out in order to have a matched watermarked signal 500 that is used for the panel measurement campaign. This technique is preferably used in combination with a portable people meter (PPM), even if other types of devices for the analyzer 15 could be used.

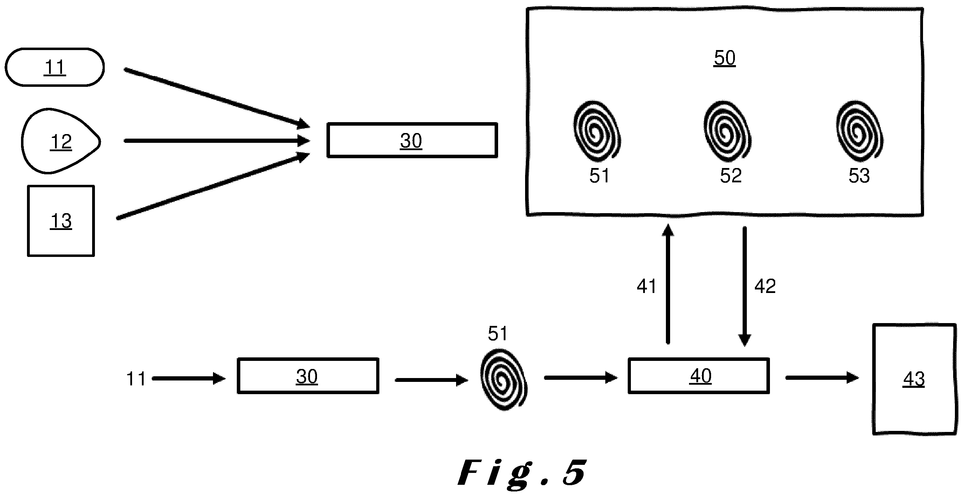

Figure 5 illustrates the fingerprinting technique. For that technique, there is the creation, preferably in real-time, of a database 50 of fingerprints (51, 52, 53) that are created by extraction 30 from the identification of different program contents (11, 12, 13). When one accesses to a given program content 11 (example of an original digital content 1), the corresponding fingerprint 51 is extracted 30. Thereafter, a match 40 with fingerprints (51, 52, 53) from the database 50 of fingerprints is carried out, by request 41 to and response 42 from said database 50, allowing to know the result 43 in terms of which program content (11,12,13) has been accessed.

The method of the invention is very flexible or versatile as it can be used both with the watermarking and the fingerprinting techniques for panel measurement campaigns.

With the method of the invention, it is possible to take profit of the advantages of both panel and census data.

By taking into account census data, one can in real-time supplement panel data with consumption information of contents, and have a more precise knowledge of that consumption. For instance, one can further know the types of players and devices used: brand, version, type (web player, third party, mobile application, smart TV, computer, etc). From the census data, one can also extract the following data: how the original digital content 1 is accessed (full screen, scroll page, etc), if other digital contents are accessed at the same time, if adds have been proposed to the user, if subtitles have been activated in the player, type of internet connexion and possible issues with it, how the user accessed the original digital content 1, from where (especially if GPS is activated), use of headset of other accessories. On the other hand, by using panel data, reliability of the users' profiles derived from census measurements can be improved. Indeed, to become a panellist, one normally has to register and give different socio-demographic details. And so, by using panel data, one can supplement census data with data such as: socio-demographic information of the user, exact localization from where the original digital content 1 is accessed, access to the original digital content 1 alone or with other people, contents accessed before and after the original digital content 1. So, enriching the census data with those of the panel increases in particular the reliability of the socio-demographic data of the profiles and the efficiency of the recommendation algorithms.

The present invention has been described with reference to a specific embodiments, the purpose of which is purely illustrative, and they are not to be considered limiting in any way. In general, the present invention is not limited to the examples illustrated and/or described in the preceding text. Use of the verbs "comprise", "include", "consist of", or any other variation thereof, including the conjugated forms thereof, shall not be construed in any way to exclude the presence of elements other than those stated. Use of the indefinite article, "a" or "an", or the definite article "the" to introduce an element does not preclude the presence of a plurality of such elements. The reference numbers cited in the claims are not limiting of the scope thereof.

In summary, the invention may also be described as follows. The invention proposes a method to associate panel data with census data. From the access to a platform 701 for accessing (or reading, consuming, watching, listening) an original digital content 1 for a census measurement, a unique identifier 10 is generated. Said unique identifier 10 is included in a digital flux 20 used for panel measurements. As said unique identifier 10 is saved both during census and panel measurements, a sure match between the collected census and panel data is possible.

## Claims

1. Method for associating panel data with census data and comprising:
a) accessing a platform (701) for accessing an original digital content (1) for a census measurement campaign;
b) generating a unique identifier (10) from the access of step a);
c) transmitting to an analyser (15) for a panel measurement campaign a digital flux (20), wherein said digital flux (20) is based on said original digital content (1) of step a) and comprising said unique identifier (10).

2. Method according to any of the previous claims, wherein said digital flux (20) comprises two signals (201,202), a first one (201) comprising said unique identifier (10), and a second one (202) that is based on said original digital content (1) of step a).

3. Method according to previous claim wherein the first signal (201) is transmitted before the second signal (202).

4. Method according to claim 3 wherein said first (201) and second (202) signals are transmitted simultaneously.

5. Method according to claim 1 or 2, wherein said unique identifier (10) is incorporated in at least part of the original digital content (1) of step a) for creating said digital flux (20).

6. Method according to any one of the preceding claims wherein said original digital content (1) is an audio signal.

7. Method according to any one of the preceding claims wherein said unique identifier (10) is maximum 2 bytes long.

8. Method according to any one of the preceding claims wherein said unique identifier (10) starts at 0 each day.

9. Method according to any one of the preceding claims wherein said unique identifier (10) is generated by using an Hi/Lo algorithm.

10. Method according to any one of the preceding claims wherein the content of said digital flux (20) is analysed by using a watermarking technique for the panel measurement campaign.

11. Method according to any one of the preceding claims wherein the content of said digital flux (20) is analysed by using a finger printing technique for the panel measurement campaign.

12. Method according to any one of the preceding claims wherein a unique session ID is created when accessing said original digital content (1), said unique session ID being used for generating said unique identifier (10).

13. Method according to any one of the preceding claims wherein:
- data related to said census measurement campaign of step a) is saved with said unique identifier (10); and wherein
- data related to said panel measurement campaign of step c) is saved with said unique identifier (10).

14. Method according to any one of the preceding claims wherein data related to said census measurement campaign of step a) is enriched with data related to said panel measurement campaign of step c).

15. An apparatus for associating panel data with census data and comprising:
- means for accessing a platform (701) for accessing an original digital content (1);
- a key generator for creating a unique identifier (10) when said platform (701) is accessed ;
- means for transmitting a digital flux (20), wherein said digital flux (20) is based on said original digital content (1) and comprising said unique identifier (10);
- an analyzer (15) for performing a panel measurement campaign from said digital flux (20).
